# EUROPÄISCHE PATENTSCHRIFT

(11) **EP 1 649 180 B1**
(45) Veröffentlichungstag und Bekanntmachung des Hinweises auf die Patenterteilung: **14.02.2007**
(21) Anmeldenummer: 04762509.0
(22) Anmeldetag: 23.07.2004
(51) Int. Cl.: F16C 33/12, B29D 30/06, B29C 33/00

(54) **FÜHRUNGSELEMENT, VERWENDUNG EINES FÜHRUNGSELEMENTES UND VERFAHREN ZUR HERSTELLUNG EINES FÜHRUNGSELEMENTES**
GUIDE ELEMENT, USE OF A GUIDE ELEMENT AND METHOD FOR THE PRODUCTION OF A GUIDE ELEMENT
ELEMENT DE GUIDAGE, UTILISATION D'UN ELEMENT DE GUIDAGE, ET PROCEDE DE PRODUCTION D'UN TEL ELEMENT DE GUIDAGE

(30) Priorität: 02.08.2003 DE 10335452
(43) Veröffentlichungstag der Anmeldung: 26.04.2006
(73) Patentinhaber: Federal-Mogul Deva GmbH, 35260 Stadtallendorf (DE)
(72) Erfinder: STADLMAYR, August, A-4693 Desselbrunn (AT); LIPPERT, Peter, 34626 Neukirchen (DE)
(74) Vertreter: Fuchs Mehler Weiss & Fritzsche
(86) Internationale Anmeldenummer: PCT/DE2004/001662
(87) Internationale Veröffentlichungsnummer: WO 2005/014255

(56) Entgegenhaltungen:
- EP-A- 0 060 725
- EP-A- 0 250 708
- WO-A-93/22576
- DE-A1- 19 804 419
- DE-A1- 19 822 338
- DE-A1- 19 950 621
- US-A- 5 041 339
- OBERG, E. ET AL.: "Machinery's Handbook" 2000, INDUSTRIAL PRESS INC. , NEW YORK , XP002315856 Seite 1420, Absatz 4

## Beschreibung

Die Erfindung betrifft ein Führungselement mit einem Grundkörper mit mindestens zwei, in verschiedenen nichtparallelen Ebenen liegenden Führungsflächen. Die Erfindung bezieht sich auch auf eine Verwendung solcher Führungselemente und auf ein Verfahren zur Herstellung derselben.

Die DE 198 04 419 A1 offenbart eine Anordnung zum Führen von Linearbewegungen als Gleit- oder Wälzvorgang. Zwischen einer Führungsschiene und einem Führungswagen ist in einer Kontaktzone ein Blechstreifen als Trägermaterial mit einer zusätzlich aufgetragenen Gleitschicht vorgesehen.

Führungselemente, insbesondere mit T-förmigem Querschnitt, werden beispielsweise in Formen zur Herstellung von Autoreifen, in so genannten Reifenvulkanisierformen, verwendet. Die beiden Formteile werden beim Öffnen und Schließen gegeneinander bewegt, wozu die T-Stücke oder Hakenelemente zur Führung dienen.

Aus der EP 0 250 708 B1 ist eine solche Reifenvulkanisierform zur Ausformung von Fahrzeugreifen bekannt. Dabei sind zur Formgebung Radialformsegmente ausgebildet, die zum Öffnen und Schließen der Form im Formbehälter in Öffnungs- bzw. Schließrichtung gleitend beweglich und senkrecht zur Öffnungs- bzw. Schließrichtung fest gelagert sind. Zur Lagerung der Formsegmente ist jedes Formsegment jeweils mit einer schienenartigen Gleitnut mit parallelen Seitenwänden und der Schließring des Formbehälters mit einem zur Gleitschiene korrespondierend ausgebildeten Gleitschlitten ausgebildet. Der Gleitschlitten ist mit einem Führungselement ausgebildet.

Das im Querschnitt T-förmige Führungselement erstreckt sich von außerhalb der Gleitschiene in diese hinein, so dass in der Gleitschiene der T-Balken des T-förmigen Querschnitts zur Sicherstellung des gleitenden Führungskontaktes zur Gleitschiene von den Seitenwänden der Schiene umgriffen ist.

Das im Querschnitt T-förmige Führungselement ist wenigstens dreiteilig ausgebildet, wobei zwischen einem Abstandshalter und einem Querschenkel ein Gleitmittelblech befestigt wird. Im Bereich des gleitenden Kontaktes zwischen dem dreiteiligen Führungselement und der Gleitschiene wirkt das Gleitmittelblech verschleißmindemd.

Zur Montage werden die drei separaten Teile des T-förmigen Führungselementes zusammengeschraubt. Bei Verschleiß des Gleitmittelbleches über ein gewünschtes Maß hinaus werden die Teile auseinandergeschraubt, das verschlissene Gleitmittelblech gegen ein neues ersetzt und das neue Gleitmittelblech mit den anderen Teilen wieder verschraubt. Spalt- und Setzbereiche zwischen den drei Teilen und zwischen den Teilen und den Schrauben können jedoch besonders nach häufigem Gebrauch zu ungewünschten, undefinierten Verkantungen und Ungenauigkeiten in der Funktionsweise der Formsegmente führen. Hierdurch kann die Ausformgenauigkeit und die Lebensdauer der Formmechanismen unerwünscht stark reduziert werden. Diesen Effekten kann bedingt dadurch entgegengewirkt werden, dass alle drei Bauteile in kürzeren Zeiträumen ausgetauscht werden.

Wird nur das Gleitmittelblech häufiger ausgetauscht, führt dies dazu, dass durch den bereits durch den zuvor erfolgten Verschleiß zwischen den Bauteilen und den Schrauben bereits mit Einbau eines neues Gleitmittelblechs hohe und zum Teil undefinierte Ungenauigkeiten und Verkantungen in dem für die Genauigkeit des Schließ- und Öffnungsmechanismus der Form wichtigen T-förmigen Führungselement eingebaut werden. Wartungs- und Bedienungsfehler bei der Montage und bei der Demontage des T-förmigen Führungselementes erhöhen das Risiko. Darüber hinaus kann nur ein geringer Anteil der aufwendigen, kostspieligen Gleitmittelbeschichtung zur Verschleißminderung genutzt werden, da ein großer Flächenanteil der Beschichtung von den anderen beiden Bauteilen abgedeckt ist.

Um hier Abhilfe zu schaffen, wurde in der DE 198 22 338 vorgeschlagen, auf die Führungsflächen des aus Stahl bestehenden Führungselementes an der radialen Innenseite des Querkopfes ein Gleitmaterial aufzusintern. Die entsprechenden Flächen wurden mit einem 2 bis 5 mm dicken aufgesinterten Gleitmaterial beschichtet. Hierzu wurde ein Pulver aus Cu81 Sn13C6F verwendet.

Bei einigen Formen werden beim Schließ- und Öffnungsvorgang durch eine zusätzliche Schwenkbewegung auch die Seitenflächen des vertikalen Schenkels des T-förmigen Führungselementes als Führungsfläche beansprucht, so dass dort ebenfalls Gleitflächen vorgesehen sein müssen.

Durch die Verwendung eines hochwertigen Stahls für den Grundkörper des Führungselementes kann auf eine zusätzliche Beschichtung In diesem Bereich verzichtet werden. Trotzdem ist der Verschleiß relativ hoch, so dass es wünschenswert ist, auch diese Flächen des Grundkörpers mit einer Gleitbeschichtung zu versehen.

Eine Sinterbeschichtung aufzubringen, ist in diesem Bereich äußerst aufwendig, weil es ohne kostspielige Änderung des Werkzeuges nicht möglich ist, den erforderlichen Anpressdruck auf die in einer anderen Ebene liegenden Führungsflächen aufzubringen.

Es ist daher Aufgabe der Erfindung, ein Führungselement zu schaffen, dessen in verschiedenen, nichtparallelen Ebenen liegenden Führungsflächen auf einfache Weise mit einem Gleitbelag versehen werden können.

Diese Aufgabe wird mit einem Führungselement gemäß Anspruch 1 gelöst, bei dem der mindestens eine vorgefertigte Streifen aus Bandmaterial mittels Laserschweißen auf dem Grundkörper befestigt ist.

Beim Aufbringen eines vorgefertigten Streifens aus Bandmaterial auf die Führungsfläche sind keine aufwendigen Werkzeuge erforderlich, wie dies beim Aufbringen von Sintermaterial auf Führungsflächen in verschiedenen Ebenen, die nicht parallel sind, der Fall wäre. Das Bandmaterial kann in großen Mengen kostengünstig vorgefertigt werden und braucht lediglich zugeschnitten und auf diesen Führungsflächen befestigt zu werden.

Der Grundkörper eines solchen mit Bandmaterial versehenen Führungselementes kann aus kostengünstigerem Material vorzugsweise einstückig hergestellt werden, weil die durch den Gegenläufer verursachte Belastung und der Verschleiß durch das Bandmaterial aufgefangen wird.

Die Befestigung mittels Laserschweißen hat den Vorteil, dass kein nennenswerter Wärmeeintrag in das Werkstück erfolgt. Die Gleitschicht, insbesondere wenn sie aus Kunststoff besteht oder Kunststoffanteile aufweist, wird nicht beschädigt und der oder die Streifen aus Bandmaterial können sich beim Laserschweißen nicht verziehen, wie dies beim herkömmlichen Schweißen der Fall ist.

Vorteilhafte Ausgestaltungen der Erfindung sind Gegenstand der abhängingen Ansprüche.

Bei einem Führungselement mit einem T-förmigen Grundkörper sind vorzugsweise mindestens die rechtwinklig zueinander angeordneten innenliegenden Führungsflächen mit Streifen aus Bandmaterial versehen.

Gemäß einer Ausführungsform kann jede einzelne Führungsfläche mit einem eigenen Streifen aus Bandmaterial versehen sein. Das Herstellverfahren kann dadurch weiter vereinfacht werden, dass jeweils zwei aneinandergrenzende Führungsflächen mit einem gemeinsamen Streifen aus Bandmaterial versehen sind.

Vorzugsweise besteht der Grundkörper aus Baustahl (ST 37) und das Trägermaterial ebenfalls aus Stahl oder Edelstahl.

Vorzugsweise besteht das Gleitmaterial aus einem Sinterwerkstoff.

Das Gleitmaterial besteht vorzugsweise aus einer Kupfer-Zinn-Legierung, wobei die Kupfer-Zinn-Legierung vorteilhafterweise PTFE und/oder Graphit als Festschmierstoff enthält. Insgesamt wird durch den hochbelastbaren Stahlrücken und die für niedrige Reibwerte sorgende Bronzematrix mit homogener Festschmierstoffeinlagerung ein selbstschmierender Verbundgleitwerkstoff zur Verfügung gestellt, der für Führungselemente sehr gut geeignet ist. Der Festschmierstoff kann feinverteilt oder in agglomerierter Partikelform im Gefüge vorliegen und zeichnet sich durch eine lamellare Struktur sowie durch einen niedrigen Grenzflächenwiderstand der gegenüberliegenden Molekulargrenzen aus.

Zur Unterstützung der Einlaufphase im reinen Trockenlauf kann zusätzlich eine 10 bis 30 µm dicke Einlaufschicht aus Graphit und/oder PTFE aufgebracht werden. Für den Einsatz mit konventionellen Schmiermitteln kann das Bandmaterial auch mit Öl imprägniert werden.

Vorzugsweise liegt der PTFE-Anteil bei 8 Gew.% bis 10 Gew.%, insbesondere bei 9 Gew.%.

Der Graphit-Anteil beträgt vorzugsweise 6 Gew.% bis 12 Gew.%, insbesondere 8 Gew.% bis 10 Gew.%.

Die Gew.%-Angaben beziehen sich auf das Matrixmaterial, z.B. das Kupfer-Zinn-Material, das mit 100% angenommen wird.

Eine bevorzugte Verwendung solcher Führungselemente ist für Formen zur Herstellung von Kautschukreifen, insbesondere von Autoreifen, LKW-Reifen oder Industriereifen vorgesehen.

Das Verfahren zur Herstellung eines Führungselementes gemäß Anspruch 14 sieht vor, dass Streifen aus Bandmaterial, die ein Trägermaterial und ein darauf aufgebrachtes Gleitmaterial aufweisen, vorgefertigt werden und dass die Streifen auf die Führungsflächen mittels Laserschweißen aufgebracht werden.

Der Streifen kann an allen vier Seiten mit einer Schweißnaht versehen werden, in der Regel reicht es jedoch aus, mindestens an einer Längsseite und an seinen beiden Stirnseiten die Laserschweißung vorzunehmen.

Zur Vereinfachung kann ein Streifen mit mindestens zwei Gleitmaterialbereichen hergestellt werden, die durch einen freiliegenden Bereich des Trägermaterials getrennt sind, wobei der Streifen im freiliegenden Bereich entsprechend der Ausrichtung, d.h. der Ebenen der zu belegenden, aneinandergrenzenden Führungsflächen umgebogen wird.

Beispielhafte Ausführungsformen der Erfindung werden nachfolgend anhand der Zeichnungen näher erläutert.

Es zeigen:
- Fig. 1: eine perspektivische Darstellung eines T-förmigen Führungselementes,
- Fig. 2: eine vergrößerte Darstellung gemäß dem Ausschnitt II in Fig. 1,
- Fig. 3: eine vergrößerte Darstellung gemäß Figur 2 einer weiteren Ausführungsform,
- Fign. 3a+3b: den Streifen gemäß Fig. 3 in der Vorbereitung, und
- Fig. 4: eine perspektivische Darstellung eines Führungselementes gemäß einer weiteren Ausführungsform.

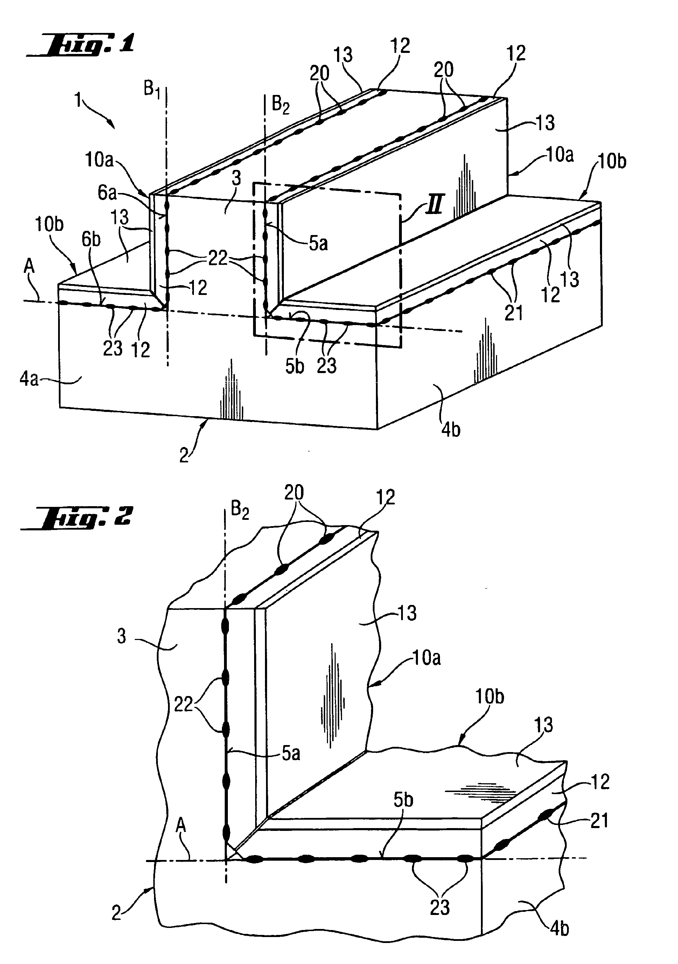

In der Fig. 1 ist ein Führungselement 1 dargestellt, das einen im Querschnitt T-förmigen einstückigen Grundkörper 2 aufweist, der einen vertikalen Schenkel 3 und einen Querkopf mit zwei horizontalen Schenkeln 4a, 4b aufweist. Die jeweiligen Führungsflächen 5a, 5b und 6a, 6b befinden sich an der Innenseite sowohl des vertikalen Schenkels 3 als auch der horizontalen Schenkel 4a, 4b. Die beiden Führungsflächen 5b, 6b befinden sich in der gemeinsamen Ebene A, während die Führungsflächen 5a, 6a in den beiden Ebenen B₁ und B₂ liegen. Die Führungsflächen 5a, 5b und 6a, 6b stehen jeweils senkrecht zueinander und liegen somit nicht in derselben Ebene.

Jede Führungsfläche 5a, 5b, 6a, 6b ist mit einem Streifen 10a, 10b aus Bandmaterial belegt.

Wie in der Fig. 2 dargestellt ist, bestehen die beiden Streifen 10a, 10b aus einem Trägermaterial 12, das auf dem Grundkörper 2 aufliegt und aus einer Gleitmaterialschicht 13, die unmittelbar auf dem Trägermaterial 12 aufgebracht ist. Im angrenzenden Eckbereich sind die beiden Streifen schräg angeschnitten, so dass sie lückenlos aneinander stoßen. An den jeweiligen beiden Längsseiten der Streifen sind Laserschweißnähte 20, 21 und an den Stirnseiten die Schweißnähte 22 und 23 vorgesehen. Die Laserschweißnähte sind hier beispielsweise als Punktschweißungen dargestellt. Selbstverständlich kann die Schweißung auch durchgängig ausgeführt sein.

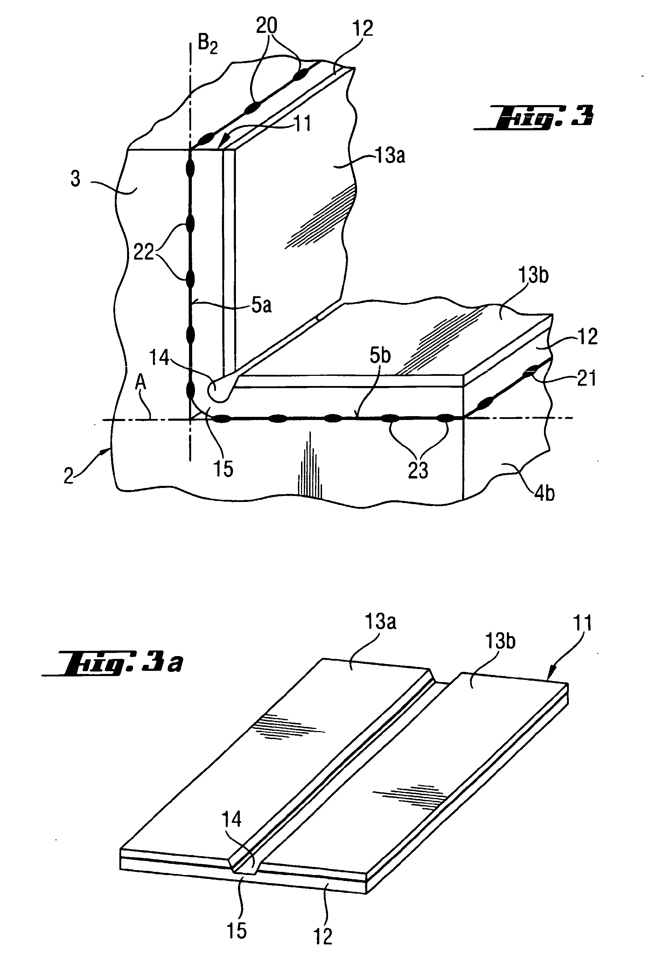

In der Fig. 3 ist eine weitere Ausführungsform dargestellt, bei welcher die zwei senkrecht zueinander angeordneten Führungsflächen 5a und 5b mit einem aus einem aus Bandmaterial geformten Streifen 11 belegt sind. Wie in Fig. 3a schematisch dargestellt, liegt der Streifen 11 zunächst als flaches Gebilde aus einem Trägermaterial 12 mit einseitig aufgebrachten, durch einen Freistich 14 in zwei Abschnitte geteilten Gleitmaterialschichten 13a, 13b vor. Der Freistich 14 erstreckt sich dabei auch teilweise in das Trägermaterial 12 hinein und bildet eine Biegezone 15 aus. Vor dem Anbringen des Streifens 11 an das Führungselement 1' wird der zunächst flache Streifen 11 in der Biegezone 15 um den Winkel α von 90 Grad umgebogen (s. Fig. 3b), so dass die Gleitmaterialschichten 13a und 13b die Funktionsflächen im offenen Winkel bilden und über das Trägermaterial 12 in den Ebenen A und B₁ an den Längsseiten und den Stirnseiten mittels Laserschweißungen 20, 21, 22, 23 mit dem Grundkörper 2' verbunden werden können. In Fig. 3b ist partiell eine sogenannte Einlaufschicht 16 schematisch an gedeutet. Diese Einlaufschicht 16 kann natürlich bei allen Ausführungsbeispielen vorgesehen sein.

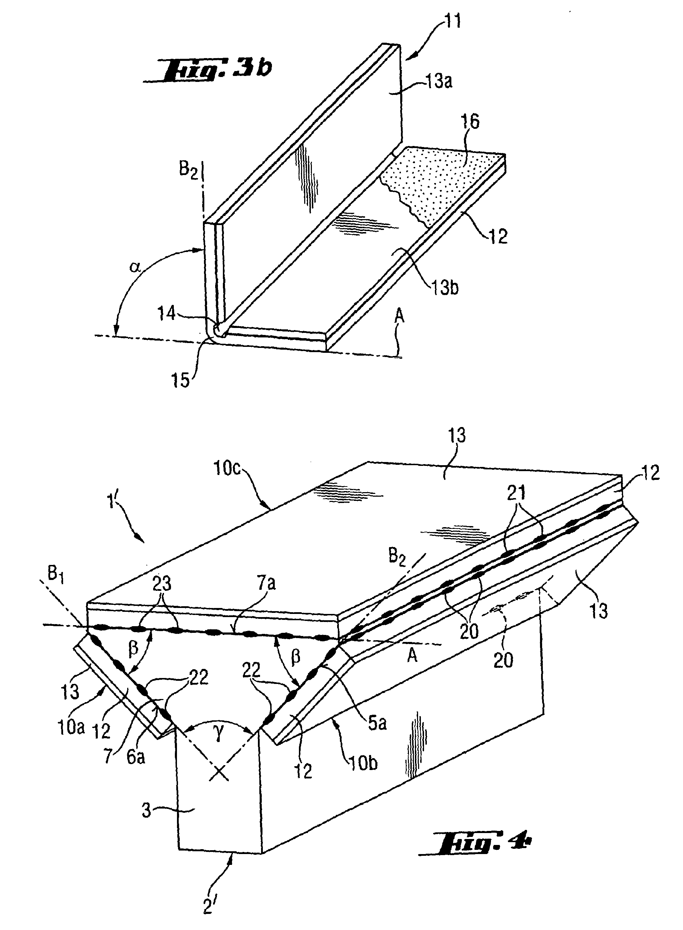

In der Fig. 4 ist eine weitere Ausführungsform dargestellt, wobei das Führungselement 1' einen Y-förmigen einstückigen Grundkörper 2' aufweist, der einen vertikalen Schenkel 3 und einen V-förmigen Schenkel 7 aufweist. Insgesamt gibt es in den Ebenen A, B₁ und B₂, die zueinander einen Winkel β von 45° bzw. γ von 90° bilden, drei Führungsflächen 5a, 6a, 7a, die entsprechend mit drei Streifen 10a, 10b, 10c aus Bandmaterial belegt sind, wobei diese Streifen ebenfalls lasergeschweißt sind (vgl. Fig. 1).

Bevorzugte Werkstoffe für die Streifen aus Bandmaterial sind in der nachfolgenden Tabelle aufgeführt:

| **Zusammensetzung** | | | | | | |
|---|---|---|---|---|---|---|
| **Ifd. Nr.** | **Werkstoffe** | **Stahlrücken** | **Gewichtsanteile in %** | | | **Festschmierstoff Gew.%** |
| | | | Cu | Sn | Pb | |
| 1 | CuSn8713/9P | Niro²⁾ | 87 | 13 | | 9 |
| 2 | CuSn8713/6E | Niro | 87 | 13 | | 6 |
| 3 | CuSnPb8213/8E | Niro | 82 | 13 | 5 | 8 |
| 4 | CuSnPb8213/10pfE | Niro | 82 | 13 | 5 | 10 |
| 5 | CuSnPb8213/10pfE | unlegiert | 82 | 13 | 5 | 10 |
| 6 | CuSnPb8213/10pfE¹⁾ | unlegiert³⁾ | 82 | 13 | 5 | 10 |

| | | | | | | |
|---|---|---|---|---|---|---|
| 1) dieses Bandmaterial ist mit Schmiertaschen in der Laufschicht versehen ²⁾ DIN 1.4301 oder 1.4571 ³⁾ DIN 1.0338 | | | | | | |

Das Trägermaterial besteht aus einem Stahlrücken 12, der aus Edelstahl (Niro) oder unlegiertem Stahl besteht. Die angegebenen Gewichtsanteile von Kupfer und Zinn bzw. Blei beziehen sich auf das sogenannte Matrixmaterial und ergeben in der Summe 100 Gew.%. Bezogen auf diese 100 % ist der Festschmierstoff-Gewichtsprozent-Anteil angegeben.

### Bezugszeichen

- 1, 1': Führungselement
- 2, 2': Grundkörper
- 3: vertikaler Schenkel
- 4a, 4b: horizontaler Schenkel
- 5a, 5b: Führungsfläche
- 6a, 6b: Führungsfläche
- 7: V-förmiger Schenkel
- 7a: Führungsfläche

- 10a, 10b, 10c: Streifen aus Bandmaterial
- 11: Streifen aus Bandmaterial
- 12: Trägermaterial
- 13: Gleitmaterial
- 13a, 13b: Gleitmaterialbereich
- 14: Freistich
- 15: Biegezone
- 16: Einlaufschicht

- 20: Schweißnaht
- 21: Schweißnaht
- 22: Schweißnaht
- 23: Schweißnaht

- A: Ebene
- B₁: Ebene
- B₂: Ebene

- α: Winkel
- β: Winkel
- γ: Winkel

## Patentansprüche

1. Führungselement mit einem Grundkörper mit mindestens zwei, in verschiedenen, nichtparallelen Ebenen (A, B₁, B₂) liegenden Führungsflächen, wobei die Führungsflächen (5a,5b,6a,6b,7a) mit mindestens einem vorgefertigten Streifen aus Bandmaterial (10a,10b,10c,11) versehen sind, das ein Trägermaterial (12) und ein darauf aufgebrachtes Gleitmaterial (13,13a,13b) aufweist, **dadurch gekennzeichnet, dass** der mindestens eine vorgefertigte Streifen (10a, 10b, 10c) aus Bandmaterial mittels Laserschweißen auf dem Grundkörper (2,2') befestigt ist.

2. Führungselement mit einem T-förmigen Grundkörper nach Anspruch 1, **dadurch gekennzeichnet, dass** mindestens die rechtwinklig zueinander angeordneten innenliegenden Führungsflächen (5a,5b,6a,6b) mit Streifen (10a,10b) aus Bandmaterial versehen sind.

3. Führungselement nach einem der Ansprüche 1 oder 2, **dadurch gekennzeichnet, dass** jede Führungsfläche (5a,5b,6a,6b,7a) mit einem eigenen Streifen (10a,10b,10c) aus Bandmaterial versehen ist.

4. Führungselement nach einem der Ansprüche 1 oder 2, **dadurch gekennzeichnet, dass** jeweils zwei aneinandergrenzende, in verschiedenen Ebenen liegende Führungsflächen (5a,5b bzw. 6a,6b) mit einem gemeinsamen Streifen (11) aus Bandmaterial versehen sind.

5. Führungselement nach einem der Ansprüche 1 bis 4, **dadurch gekennzeichnet, dass** der Grundkörper (2,2') aus Baustahl (St 37) besteht und das Trägermaterial (12) ebenfalls aus Stahl oder Edelstahl besteht.

6. Gleitelement nach einem der Ansprüche 1 bis 5, **dadurch gekennzeichnet, dass** das Gleitmaterial (13,13a,13b) aus einem Sinterwerkstoff besteht.

7. Führungselement nach einem der Ansprüche 1 bis 6, **dadurch gekennzeichnet, dass** das Gleitmaterial (13,13a,13b) aus einer Kupfer-Zinn-Legierung besteht.

8. Führungselement nach Anspruch 7, **dadurch gekennzeichnet, dass** die Kupfer-Zinn-Legierung PTFE und/oder Graphit enthält.

9. Führungselement nach Anspruch 8, **dadurch gekennzeichnet, dass** der PTFE-Anteil 8 bis 10 Gew.% beträgt.

10. Führungselement nach Anspruch 8 oder 9, **dadurch gekennzeichnet, dass** der Graphit-Anteil 6 bis 12 Gew.% beträgt.

11. Führungselement nach einem der Ansprüche 1 bis 10, **dadurch gekennzeichnet, dass** auf dem Gleitmaterial (13) eine Einlaufschicht (16) aufgebracht ist.

12. Verwendung eines Führungselementes nach einem der Ansprüche 1 bis 11 für Formen zur Herstellung von Kautschukreifen.

13. Verwendung eines Führungselementes nach Anspruch 12 für Formen zur Herstellung von Autoreifen, LKW-Reifen oder Industriereifen.

14. Verfahren zur Herstellung eines Führungselementes mit einem Grundkörper mit mindestens zwei, in verschiedenen, nichtparallelen Ebenen liegenden Führungsflächen, **dadurch gekennzeichnet,**
**dass** Streifen aus Bandmaterial, die ein Trägermaterial und ein darauf aufgebrachtes Gleitmaterial aufweisen, vorgefertigt werden, und
**dass** die Streifen auf eine Führungsflächemittels Laserschweißen aufgebracht werden.

15. Verfahren nach Anspruch 14, **dadurch gekennzeichnet, dass** die ihren beiden Streifen mindestens an einer Längsseite und Stirnseiten lasergeschweißt werden.

16. Verfahren nach Anspruch 14 oder 15, **dadurch gekennzeichnet, dass** Streifen mit mindestens zwei Gleitmaterialbereichen hergestellt werden, die durch einen freiliegenden Bereich des Trägermaterials getrennt sind, und
dass die Streifen im freiliegenden Bereich entsprechend der Ebenen der zu belegenden aneinandergrenzenden Führungsflächen umgebogen werden.

## Claims

1. A guide element comprising a body having at least two guide surfaces lying in different, non-parallel planes (A, B₁, B₂), the guide surfaces (5a, 5b, 6a, 6b, 7a) being provided with at least one prefabricated band of strip material (10a, 10b, 10c, 11), which has a base material (12) and a slide material (13, 13a, 13b) applied thereto, **characterized in that** at least one prefabricated band (10a, 10b, 10c) of strip material is affixed to the body (2, 2') by laser welding.

2. The guide element having a T-shaped body according to Claim 1, **characterized in that** at least the inner guide surfaces (5a, 5b, 6a, 6b) arranged at right angle to one another are provided with bands (10, 10b) of strip material.

3. The guide element according to either of Claims 1 or 2, **characterized in that** the each guide surface (5a, 5b, 6a, 6b, 7a) is provided with its own band (10a, 10b, 10c) of strip material.

4. The guide element according to either of Claims 1 or 2, **characterized in that** each two adjoining guide surfaces (5a, 5b and 6a, 6b) lying in different planes are provided with a common band (11) of strip material.

5. The guide element according to any one of Claims 1 to 4, **characterized in that** the body (2, 2') is composed of structural steel (St 37) and the base material (12) is likewise composed of steel or stainless steel.

6. A slide element according to any one of Claims 1 to 5, **characterized in that** the slide material (13, 13a, 13b) is composed of a sintered material.

7. The guide element according to any one of Claims 1 to 6, **characterized in that** the slide material (13, 13a, 13b) is composed of a copper-tin alloy.

8. The guide element according to Claim 7, **characterized in that** the copper tin alloy contains PTFE and/or graphite.

9. The guide element according to Claim 8, **characterized in that** the proportion of PTFE is 8 to 10% by weight.

10. The guide element according to Claim 8 or 9, **characterized in that** the proportion of graphite is 6 to 12% by weight.

11. The guide element according to any one of Claims 1 to 10, **characterized in that** a running-in layer (16) is applied to the slide material (13).

12. The use of a guide element according to any one of Claims 1 to 11 for moulds for the production of rubber tyres.

13. The use of a guide element according to Claim 12 for moulds for the production of car tyres, truck tyres or industrial tyres.

14. A method for the production of a guide element comprising a body having at least two guide surfaces lying in different, non-parallel planes, **characterized in that**
bands of strip material, which have a base material and a slide material applied thereto are prefabricated, and
that the bands are applied to a guide surface by laser welding.

15. The method according to Claim 14, **characterized in that** the bands are laser welded at least on one longitudinal side and their two end faces.

16. The method according to Claim 14 or 15, **characterized in that** bands having at least two slide material areas are produced, which are separated by an exposed area of the base material, and
that the bands in the exposed area are bent over according to the planes of the adjoining guide surfaces to be covered.

## Revendications

1. Elément de guidage comprenant un corps de base avec au moins deux surfaces de guidage situées dans différents plans (A, B₁, B₂) non parallèles, les surfaces de guidage (5a, 5b, 6a, 6b, 7a) étant dotées d'au moins une bande préfabriquée à base de feuillard (10a, 10b, 10c, 11), lequel présente un matériau support (12) et un matériau de glissement (13, 13a, 13b) appliqué dessus, **caractérisé en ce que** la au moins une bande (10a, 10b, 10c) préfabriquée à base de feuillard est fixée par soudage au laser sur le corps de base (2, 2').

2. Elément de guidage comprenant un corps de base en forme de T selon la revendication 1, **caractérisé en ce que** au moins les surfaces de guidage (5a, 5b, 6a, 6b) intérieures et disposées perpendiculairement entre elles sont dotées de bande (10a, 10b) à base de feuillard.

3. Elément de guidage selon l'une quelconque des revendications 1 ou 2, **caractérisé en ce que** chaque surface de guidage (5a, 5b, 6a, 6b, 7a) est dotée d'une bande (10a, 10b, 10c) propre à base de feuillard.

4. Elément de guidage selon l'une quelconque des revendications 1 ou 2, **caractérisé en ce que** respectivement deux surfaces de guidage (5a, 5b, 6a, 6b) contiguës entre elles et disposées dans différents plans sont dotées d'une bande (11) commune à base de feuillard.

5. Elément de guidage selon l'une quelconque des revendications 1 ou 4, **caractérisé en ce que** le corps de base (2, 2') est à base d'acier de construction (St 37) et le matériau support (12) est également à base d'acier ou d'acier spécial.

6. Elément de glissement selon l'une quelconque des revendications 1 à 5, **caractérisé en ce que** le matériau de glissement (13, 13a, 13b) est à base d'un matériau fritté.

7. Elément de guidage selon l'une quelconque des revendications 1 à 6, **caractérisé en ce que** le matériau de glissement (13, 13a, 13b) est à base d'un alliage de cuivre et d'étain.

8. Elément de guidage selon la revendication 7, **caractérisé en ce que** l'alliage de cuivre et d'étain contient du PTFE et/ou du graphite.

9. Elément de guidage selon la revendication 8, **caractérisé en ce que** la fraction de PTFE représente 8 à 10 % en poids.

10. Elément de guidage selon la revendication 8 ou 9, **caractérisé en ce que** la fraction de graphite représente 6 à 12 % en poids.

11. Elément de guidage selon l'une quelconque des revendications 1 à 10, **caractérisé en ce qu'**une couche d'entrée (16) est appliquée sur le matériau de glissement (13).

12. Utilisation d'un élément de guidage selon l'une quelconque des revendications 1 à 11 pour des moules destinés à la fabrication de pneus en caoutchouc.

13. Utilisation d'un élément de guidage selon la revendication 12 pour des moules destinés à la fabrication de pneus d'automobile, de pneus de camion ou de pneus industriels.

14. Procédé pour la fabrication d'un élément de guidage avec un corps de base comprenant au moins deux surfaces de guidage disposées dans différents plans non parallèles, **caractérisé en ce que**
des bandes à base de feuillard, qui présentent un matériau support et un matériau de glissement appliqué dessus, sont préfabriquées, et
**en ce que** les bandes sont appliquées sur une surface de guidage par soudage au laser.

15. Procédé selon la revendication 14, **caractérisé en ce que** les bandes sont soudées au laser au moins sur un côté longitudinal et sur leurs deux côtés avant.

16. Procédé selon la revendication 14 ou 15, **caractérisé en ce que** des bandes présentant au moins deux zones de matériau de glissement sont fabriquées, lesquelles sont séparées par une zone mise à nu du matériau support, et
**en ce que** les bandes sont repliées dans la zone mise à nu conformément au plan des surfaces de guidage contiguës à occuper.
